# EUROPEAN PATENT SPECIFICATION

(11) **EP 0 554 644 B1**
(45) Date of publication and mention of the grant of the patent: **19.11.1997**
(21) Application number: 92830055.7
(22) Date of filing: 07.02.1992
(51) Int. Cl.: E02B 15/04, B01D 17/02

(54) **Gravity separator with tilt stabilizing means**
Schwerkraft-Abscheider mit Neigungsstabilisierung
Séparateur par gravité avec stabilisation d'inclinaison

(43) Date of publication of application: 11.08.1993
(73) Proprietor: HYDROTECH S.r.l., I-20121 Milano (IT)
(72) Inventor: AMICHAY, Jacob, I-20121 Milano (IT)
(74) Representative: Iannone, Carlo Luigi

(56) References cited:
- BE-A- 845 517
- DE-A- 2 512 291
- DE-A- 2 853 725
- DE-C- 291 781
- PATENT ABSTRACTS OF JAPAN vol. 6, no. 235 (C-136)20 November 1982 & JP-A-57 136 910 ( MARUCHI KOUKEN K.K. ) 24 August 1982

## Description

### BACKGROUND

This invention relates to a separator which utilizes gravity to separate immiscible liquids of different specific gravities. This invention relates in particular to those separators used at sea for oil spill recovery, but could also be used on board of any vessel, to separate contaminated bilge-water, ballast-water etc..

Gravity separators utilize gravity for the separation of the immiscible constituents of a liquid mass, i.e. for the separation of substances of low density from those of high density, for example: oil and water. It is common for the liquid of lower density to be referred to as the "surface liquid" and the liquid of higher density to be referred to as the "carrier liquid". Hereinafter the two abovementioned terms shall be used. The distance between the two discharge outlets of the separated constituents has to be carefully set and is usually in the order of millimetres or a few centimetres.
Owing to this proximity between the discharge levels, gravity separators have to operate on a level surface.

The slightest disruption of the difference in the relative levels can cause carrier and surface liquid to be discharged out of the wrong outlets. This makes them unsuitable for installation aboard seafaring vessels, which are prone to tilting, rolling and pitching.
A further problem is that tilting causes surges, which causes the liquids to flow out of the outlets at an uncontrolled rate, which disrupts the relative levels.

As a result of this shortcoming in present separators, in an oil spill recovery situation, large quantities of oil and water cannot be separated at the site of the spill, but have to be taken ashore for separation.

The means of delivery to a gravity separator may be by gravity, but more typically the said means of delivery would be by pumping.

In DE-C-291781 it is described a device according to the preamble of claim 1.

### BRIEF SUMMARY OF THE INVENTION

This invention relates to a gravity separator including tilt stabilizing means hereinafter referred to as "stabilizer", which enables the separator to be tilted, on any plane from a horizontal position, up to approximately 45 degrees without adversly affecting separation quality and separation rate. The gravity separator with "stabilizer" is therefore particularly suitable for use on board seafaring vessels.
The gravity separator with "stabilizer" is particularly suited for the separation of oily water mixtures caused by an oil spill at sea.

### BRIEF DESCRIPTION OF THE DRAWINGS

**Figure one** shows a typical gravity separator on a level surface i.e. parallel to the ground, indicating the formation of the carrier and surface liquid columns. **Figure one** does not have a "stabilizer" installed.

**Figure two** shows the gravity separator of **figure one** which is tilted, indicating what happens to the liquids upon tilting, especially as the liquid relates to the respective discharge outlets.

**Figure three** shows the gravity separator of **figure one** tilted in a direction opposite to that indicated in **figure two.**

**Figure four** shows a gravity separator according to the invention with a "stabilizer", indicating the new discharge outlets. The said separator is on a level surface, indicating the formation of the carrier and surface liquid columns.

**Figure five** shows the gravity separator of **figure four** with a "stabilizer", tilted in one direction.

**Figure six** shows the gravity separator of figure four with a "stabilizer", tilted in a direction opposite to that shown in **figure five**.

**figure seven** is the gravity separator with a "stabilizer" of **figure four** as seen from a side view, while tilted in one direction, on a left transverse plane with respect to the tilt direction of **figures five** and **six**.

**Figure eight** is the separator of **figure four** as seen from a side view, tilted in a direction opposite to that of **figure seven**.

**Figure nine** is a perspective view of one cone and a discharge arm of the "stabilizer".

### DETAILED DESCRIPTION OF DRAWINGS

**Figure one** shows a typical gravity separator indicating the contaminated liquid inlet (10). The primary separation chamber (11) receives the contaminated liquid, as indicated by arrows (15). The carrier liquid enters into the primary separation chamber (11) and displaces a corresponding amount of liquid which is discharged through carrier liquid outlet (13). The surface liquid floats to the surface of the carrier liquid in the primary separation chamber (11), builds up as a column (16) and eventually flows out of discharge outlet (14). The surface of the surface liquid (5) is higher than the surface of the carrier liquid (22), owing to its lower density. A surface liquid/carrier liquid interface is formed as indicated by numeral (17). When the separator is on a level surface (1), there is a difference between the level of the discharge outlets of the surface and carrier liquids as indicated by numeral (18). The flow through the separator is indicated generally by the arrows.

**Figure two** indicates the separator of **figure one** in a "left tilt" position. As can be seen from **figure two,** when the separator is tilted, the difference between the discharge outlet of the carrier liquid and the discharge outlet of the surface liquid becomes greater, as indicated by reference numeral (21), relative to reference numeral (18) as shown in **figure one.** The level of the carrier liquid in discharge chamber (19) will keep falling in the direction indicated by arrow (23) until it reaches an eventual new level, as indicated by numeral (24).
During the course of the aforementioned fall, both carrier and surface liquids would be driven through discharge outlet (14). A further feature revealed by **figure two** is that the carrier liquid discharge outlet (13) is higher than the surface liquid discharge outlet (14) with respect to ground (1) which should never be the case in a gravity separator.

**Figure three** indicates the gravity separator of **figure one** in the "right tilt" position, opposite to the position shown in **figure two.** A similar sequence of events occurs in **figure three** as occured in the diction of **figure two.** The difference between the discharge outlet of the carrier liquid and the discharge outlet of the surface liquid becomes greater, as indicated by reference numeral (21), relative to reference numeral (18) as shown in **figure one.** The level of the liquid (24) falls to level (22) by distance (21) thereby discharging both surface and carrier liquids through outlet (13).

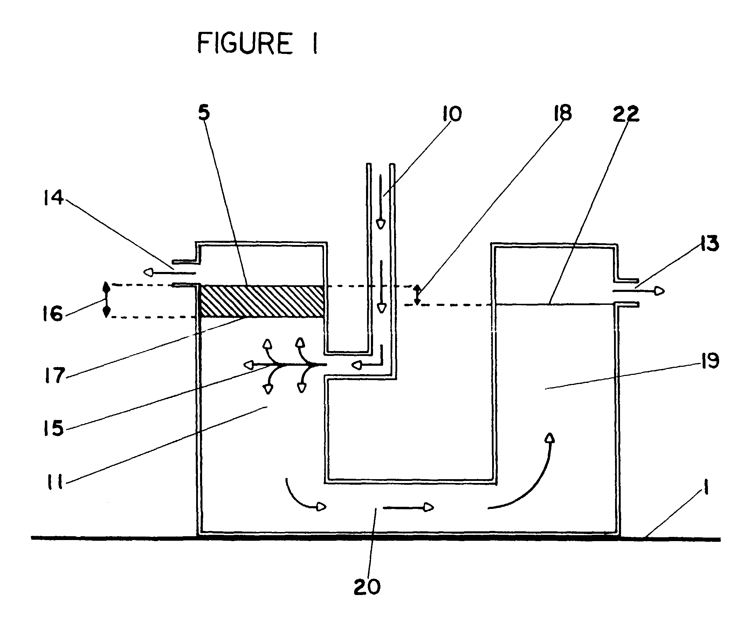

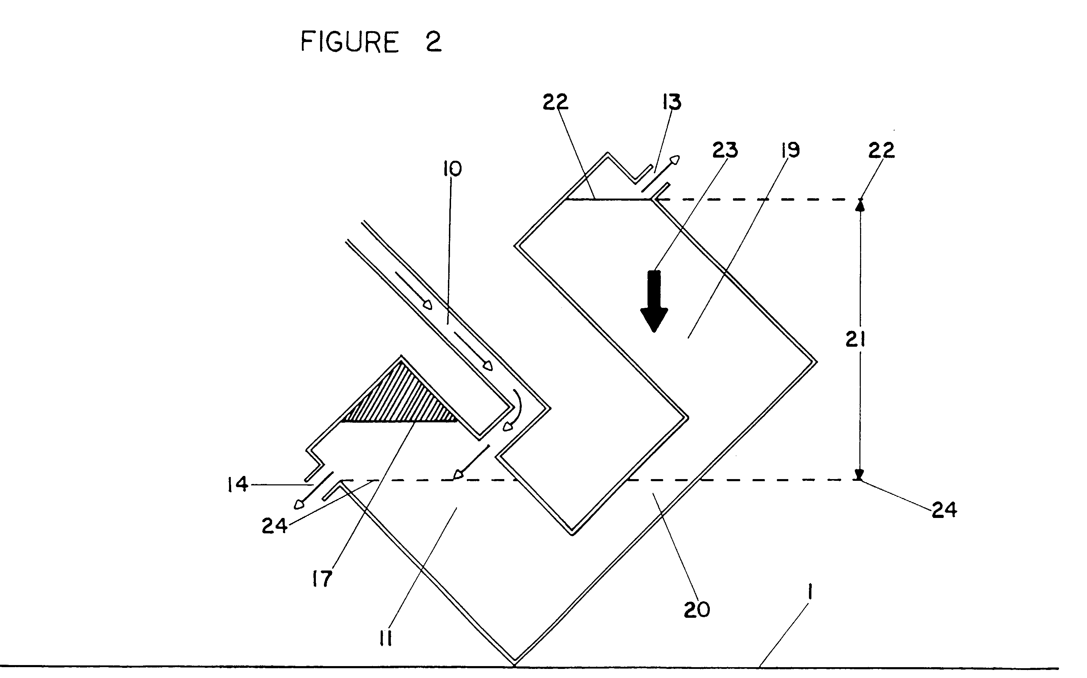

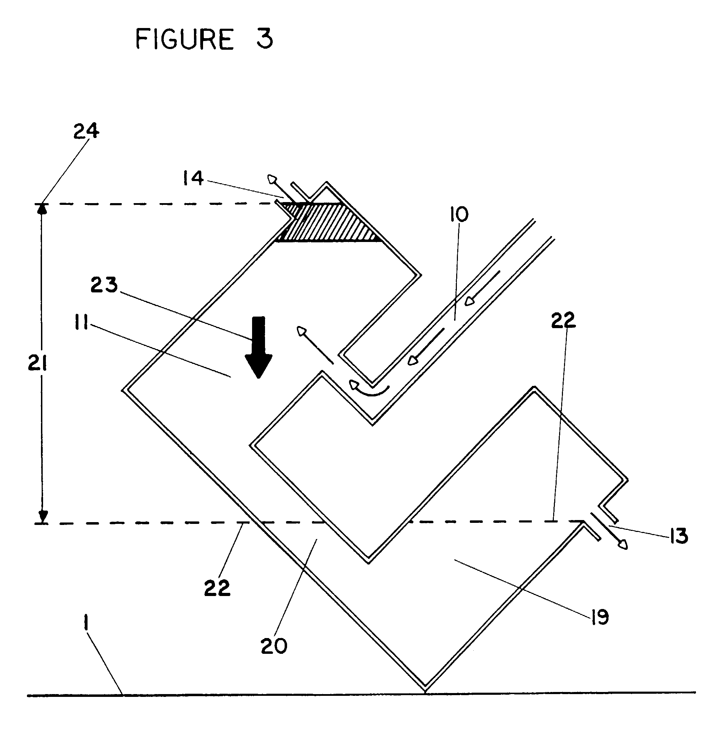

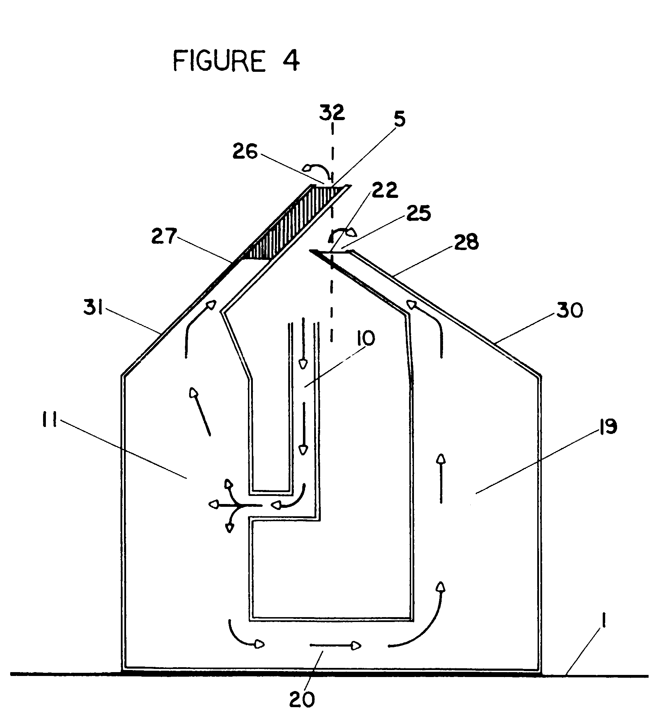

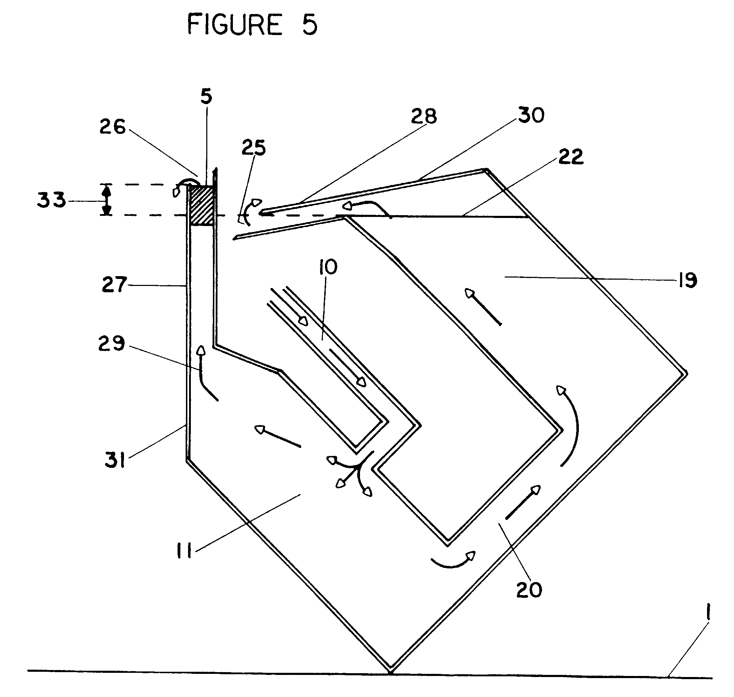

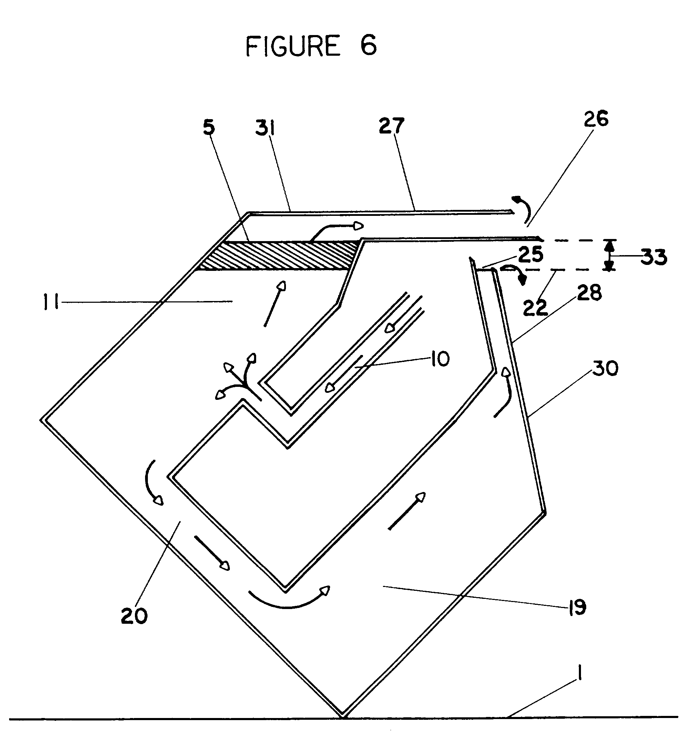

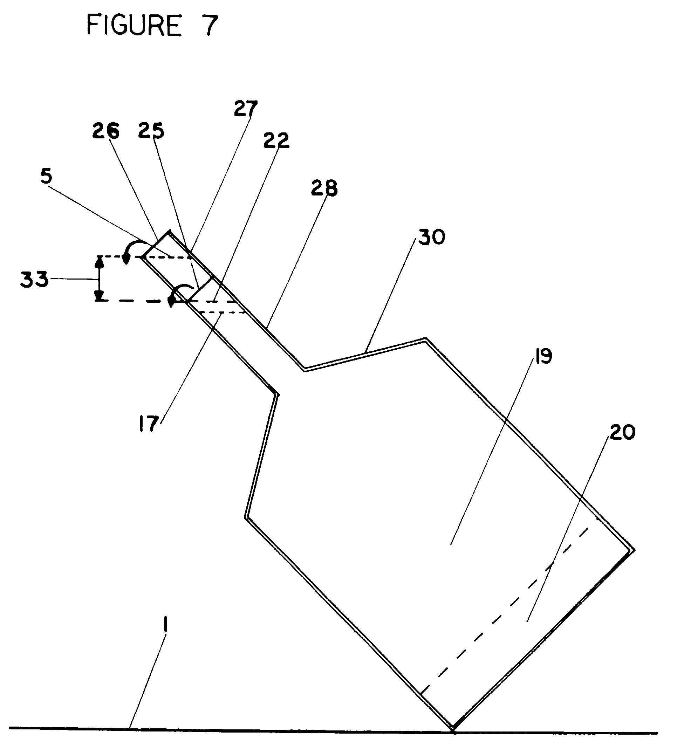

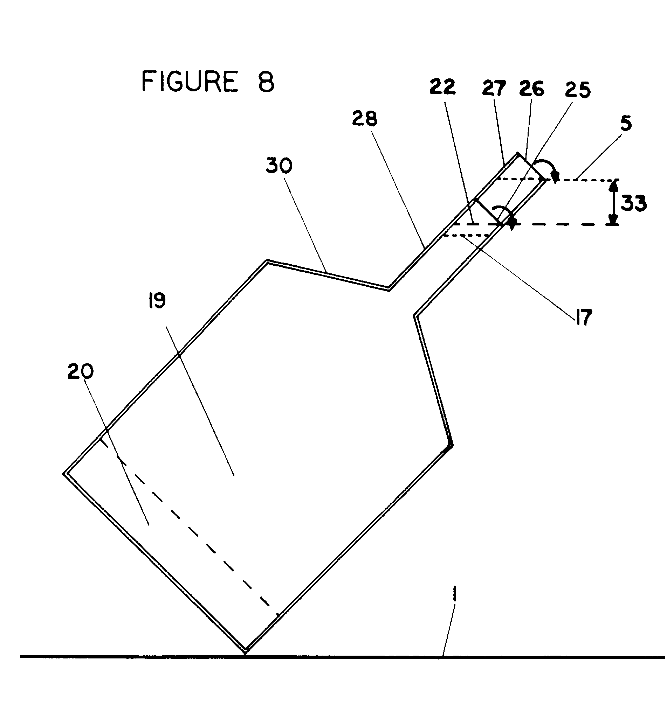

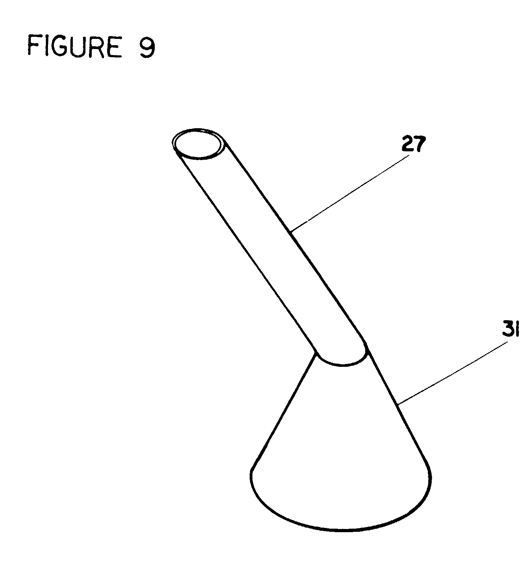

**Figure four** is the separator of **figure one** with a "stabilizer", in accordance with the invention. In the figure, the discharge outlets of the carrier and surface liquids have been repositioned as indicated by the drawing and reference numerals (25) and (26) respectively. In a preferred form of the invention, cones (31) and (30) are formed on the top of chambers (11) and (19) respectively. In accordance with the invention, at least two discharge arms extend diagonally towards one another. Carrier and surface liquid enter the separator via inlet (10).
In accordance with the invention, cone (31) directs the surface liquid, which enters the primary separation chamber (11) and rises to the top, into discharge arm (27) and flows out of outlet (26). The said cone (31) channels the surface liquid into the discharge arm (27) and owing to its shape prevents the formation of air-locks, which are created by air bubbles being trapped in the primary separation chamber (11). The carrier liquid which enters primary separation chamber (11), displaces a corresponding amount of carrier liquid, which is discharged via outlet (25). Cone (30) channels the carrier liquid into the discharge arm (28), and prevents the formation of air-locks, in a similar sequence of events as occurs in cone (31).

In accordance with the invention, discharge arm (28) together with cone (30) is shorter than discharge arm (27) together with cone (31). In a preferred form of the invention, discharge outlets (25) and (26) should be on the same vertical plane, as indicated by imaginary vertical line (32).

**Figure five** is a view of the separator indicated in **figure four** which is in the "left tilt" position. As can be seen, discharge point (25) is still lower than discharge point (26) and the difference between the two discharge levels in maintained as indicated by numeral (33). Furthermore, there is no significant drop in the levels of the liquid in both chambers. Surface liquid entering the separator simply rises as indicated by numeral (29). Carrier liquid entering the separator displaces a corresponding amount of carrier liquid which is discharged via outlet (25).

**Figure six** indicates the separator of **figure four** in the "right tilt" position, opposite to the position shown in **figure five.** As can be seen from **figure six,** the difference in the discharge levels (33) remain approximately the same, with the carrier liquid discharge outlet (25) being lower than the surface liquid discharge outlet (26). Surface liquid entering the separator simply rises towards cone (31), while carrier liquid entering the separator, displaces a corresponding amount of carrier liquid which is discharged via outlet (25).

**Figure seven** is a side view of the separator of **figure four** in a "left tilt" position, showing that the difference between surface and carrier liquid discharge outlets (25) and (26), as indicated by numeral (33), remains constant. Furthermore, there is no significant drop in the levels of the liquids, indicated by reference numerals (5) and (22), in both discharge arms (27) and (28) respectively.

**Figure eight** is a side view of the separator of **figure four** in a "right tilt" position, opposite to the position shown in **figure seven.** A similar sequence of events occurs in **figure eight** as occured in the diction of **figure seven. Figure eight** shows that the difference between surface and carrier liquid discharge outlets (25) and (26), as indicated by numeral (33), remains constant. Furthermore, there is no significant drop in the levels of the liquids, indicated by reference numerals (5) and (22), in both discharge arms (27) and (28) respectively.

Anyway, according to the invention, the outlet (25) is at a level lower than the outlet (26), comprised within an area defined by a semisphere. The centre of the said semisphere is in the centre of the discharge outlet (26) and the radius of the said semisphere does not exceed three metres.

## Claims

1. A gravity separator with tilt stabilizing means, the said separator having at least one mixture inlet (10), at least one first chamber (11) with at least one first discharge outlet (26) for the discharge of the surface liquid and at least one second chamber (19) with at least one second discharge outlet (25) for the discharge of the carrier liquid, said tilt stabilizing means comprising at least one first discharge arm (27) extending from said first discharge outlet (26) and at least one second discharge arm (28) extending from said second discharge outlet (25), the said first and second arms having each at least one discharge opening for the discharge of the surface and carrier liquids, respectively, characterized in that the discharge arms (27,28) extend with an inclination up to 90°, in that the discharge outlet (26) of the said first arm (27) for the discharge of the surface liquid is at a higher level than the discharge outlet (25) of the second arm (28) for the discharge of the carrier liquid, and in that the connection (20) between the primary separation chamber (11) and the carrier liquid discharge chamber (19) is situated at a lower part of the separator, at least below the inlet (10) into the primary separation chamber (11).

2. A gravity separator with tilt stabilizing means, according to claim 1, characterized in that the said first and second arms (27, 28) extend towards one another.

3. A gravity separator with tilt stabilizing means, according to claim 1 or 2, characterized in that the said first arm (27) is longer than the said second arm (28).

4. A gravity separator with tilt stabilizing means according to one of the preceding claims, characterized in that the discharge opening (22) of the said second arm (28) is at a level lower than the discharge opening (5) of the said first arm (27) and at a distance from the said discharge opening of the said first discharge arm (27), comprised within an area defined by a semisphere, the centre of the said semisphere is in the centre of the discharge opening of the first arm and the radius of the said semisphere does not exceed three metres.

5. A gravity separator with tilt stabilizing means according to claim 4, where the distance between the discharge opening (5) of the said first arm (27) and the discharge opening (22) of the said second arm (28), comprised within an area defined by a semisphere, the centre of the said semisphere is in the centre of the discharge opening of the first arm and the radius of the said semisphere does not exceed one metre.

6. A gravity separator with tilt stabilizing means according to one of the preceding claims, characterized in that at least one of the said arms (27, 28) is supported by at least one conical shaped base (31), the top of the conical shaped base (31) being in communication with the arm and the bottom of the conical shaped base (31) being in communication with the corresponding discharge chamber.

7. A gravity separator with tilt stabilizing means according to claim 8, characterized in that two conical shaped bases (31) are provided, each of them to support one of the said arms.

8. A gravity separator with a tilt stabilizing means according to claim 1, characterized in that cones (30,31) channel the liquids into the discharge arms (27,28) and owing to their shape prevent the formation of air-locks.

## Patentansprüche

1. Schwerkraftabscheider mit Mitteln zur Neigungsstabilisierung, der mindestens einen Mischungsseingang (10), mindestens eine erste Kammer (11) mit mindestens einem Ausladeausgang (26) zur Ausladung der Oberflächeflüssigkeit und mindestens einer zweiten Kammer (19) mit mindestens einem zweiten Ausladeausgang (25) zur Ausladung der Trägerflüssigkeit aufweist, wobei die vorgenannten Neigungsstabilisierungsmitteln mindestens einen ersten, sich vom vorgenannten ersten Ausladeausgang (26) erstreckenden Ausladearm (27) und mindestens einen, sich vom vorgenannten zweiten Ausladeausgang erstreckenden zweiten Ausladearm (28) haben, wobei der vorgenannte erste und zweite Arm je eine Ausladeöffnung zur Ausladung der Oberfläche- und Trägerflüssigkeiten aufweisen, dass gekennzeichnet, dass die Ausladearme (27,28) sich mit einer Neigung bis 90° erstrecken, dadurch der Ausladeausgang (26) des vorgenannten ersten Arms (27) zur Ausladung der Oberflächeflüssigkeit sich auf einem höheren Niveau als der Ausladeausgang (25) des zweiten Arms (28) der Trägerflüssigkeit befindet und dadurch, dass die Verbindung (20) zwischen der ersten Abscheidekammer (11) und der Ausladekammer (19) der Trägerflüssigkeit am unteren Teil des Abscheiders und mindestens unterhalb des Eingangs (10) der ersten Abscheidekammer (1) angeordnet ist.

2. Schwerkraftabscheider mit Mitteln zur Neigungsstabilisierung nach Anspruch 1, dadurch gekennzeichnet, dass der vorgenannte erste und zweite Arm (27, 28) sich zueinander erstreckend angeordnet sind.

3. Schwerkraftabscheider mit Mitteln zur Neigungsstabilisierung nach Anspruch 1 oder 2, dadurch gekennzeichnet, dass der vorgenannte erste Arm (27) länger als der vorgenannte zweite Arm (28) ist.

4. Schwerkraftabscheider mit Mitteln zur Neigungsstabilisierung nach je einem der vorhergehenden Ansprüche, dadurch gekennzeichnet, dass die Ausladeöffnung (22) des vorgenannten zweiten Arms (28) sich an einem niedrigeren Niveau als die Ausladeöffnung (5) des vorgenannten ersten Arms 827) in einem Abstand von dieser Ausladeöffnung befindet, der innerhalb eines durch eine Halbkugel bestimmten Bereiches enthalten ist, wobei der Mittelpunkt der vorgenannten Halbkugel dem Mittelpunkt der Ausladeöffnung des ersten Arms entspricht und der Halbdurchmesser der vorgenannten Halbkugel nicht grösser als drei Meter ist.

5. Schwerkraftabscheider mit Mitteln zur Neigungsstabilisierung nach Anspruch 4, worin der Abstand zwischen der Ausladeöffnung (5) des vorgenannten ersten Arms (27) und der Ausladeöffnung des vorgenannten zweiten Arms (28) innerhalb eines durch eine Halbkugel bestimmten Bereiches liegt, der Mittelpunkt der vorgenannten Halbkugel dem Mitelpunkt der Ausladeöffnung des ersten Arms entspricht und der Halbdurchmesser der vorgenannten Halbkugel nicht grösser als ein Meter ist.

6. Schwerkraftabscheider mit Mitteln zur Neigungsstabilisierung nach je einem der vorhergehenden Ansprüche, dadurch gekennzeichnet, dass mindesten einer der vorgenannte Arme (27, 28) durch mindestens einen kegelförmigen Sockel (31) getragen ist, wobei der Gipfel des kegelförmigen Sockels (31) in Verbindung mit dem Arm und die Grundfläche des kegelförmigen Sockels (31) in Verbindung mit der entsprechenden Ausladekammer steht.

7. Schwerkraftabscheider mit Mitteln zur Neigungsstabilisierung nach Anspruch 8, dadurch gekennzeichnet, dass zwei kegelförmige Sockel (31) vorgesehen sind, deren jeder einen der vorgenannten Arme trägt.

8. Schwerkraftabscheider mit Mitteln zur Neigungsstabilisierung nach Anspruch 1, dadurch gekennzeichnet, dass die Kegel (30,31) die Flüssigkeite in die Ausladearme (27, 28) einleiten und wegen deren Form die Bildung von Luftverstopfungen verhindern.

## Revendications

1. Séparateur par gravité avec des moyens de stabilisation d'inclinaison, ledit séparateur ayant au moins une entrée de mélange (11), au moins une première chambre (11) avec au moins une première sortie de décharge (26) pour décharger le liquide de surface et au moins une deuxième chambre (19) avec au moins une deuxième sortie de décharge (25) pour décharger le véhicule liquide, lesdits moyens de stabilisation comprenant au moins un premier bras de décharge (27) s'étendant de ladite première sortie de décharge (26) et au moins un deuxième bras de décharge (28) s'étendant de ladite deuxième sortie de décharge (25), lesdits premier et deuxième bras ayant chacun au moins une ouverture de décharge pour décharger le liquide de surface et le véhicule liquide, respectivement, caractérise en ce que les bras de décharge (27, 28) s'étendent à une inclinaison jusqu'à 90°, en ce que ladite sortie de décharge (26) dudit premier bras (27) pour décharger le liquide de surface se trouve à un niveau supérieur de niveau de la sortie de décharge (25) du deuxième bras (28) pour décharger le véhicule liquide et en ce que la connexion (20) entre la première chambre de séparation (11) et la chambre (19) de décharge de véhicule liquide est située à la portion infèrieure du séparateur, au moins au dessous de l'entrée (10) de la première chambre de séparation (11).

2. Séparateur par gravité avec des moyens de stabilisation d'inclinaison selon la revendication 1, caractérisé en ce que ledits premier et deuxième bras (27, 28) s'étendent l'un vers l'autre.

3. Séparateur par gravité avec des moyens de stabilisation d'inclinaison selon la revendication 1 ou 2, caractérisé en ce que ledit premier bras (27) est plus long dudit deuxième bras (28).

4. Séparateur par gravité avec des moyens de stabilisation d'inclinaison selon une quelconque des revendications précédentes, caractérisé en ce que l'ouverture de décharge (22) dudit deuxième bras (28) se trouve à niveau inférieure que l'ouverture de décharge (5) dudit premier bras (27) et à une distance de ladite ouverture de décharge dudit premier bras de décharge (27), compris dans une aire définie par un hémisphère, le centre dudit hémisphere étant correspondant au centre de l'ouverture de décharge du premier bras et le rayon dudit hémisphère ne dépasse pas trois mètres.

5. Séparateur par gravité avec des moyens de stabilisation d'inclinaison selon la revendication 4, dans lequel la distance entre l'ouverture de décharge (5) dudit premier bras (27) et l'ouverture de décharge (22) dudit deuxième bras (28) est compris dans une aire définie par un hémisphère, le centre dudit hémisphère étant correspondant au centre de l'ouverture de décharge du premier bras et le rayon dudit hémisphère ne dépasse pas un mètre.

6. Séparateur par gravité avec des moyens de stabilisation d'inclinaison selon une quelconque des revendications précédentes, caractérisé en ce que au moins un desdits bras (27, 28) est supporté par au moins un socle (31) de forme conique, le sommet du socle (31) de forme conique étant en communication avec le bras et le fond du socle (31) de forme conique étant en communication avec la chambre de décharge correspondante.

7. Séparateur par gravité avec des moyens de stabilisation d'inclinaison selon la revendication 8, caractérisé en ce qu'ils sont prevues deux socles (31) de form conique, chacun pour supporter un desdits deux bras.

8. Séparateur par gravité avec des moyens de stabilisation d'inclinaison selon la revendication 1, caractérisé en ce que les cones (30, 31) canalisent le liquides dans les arms de décharge (27, 28) et grâce à leur forme ils préviennent la formation des obstructions d'air.
